# EUROPEAN PATENT SPECIFICATION

(11) **EP 3 416 586 B1**
(45) Date of publication and mention of the grant of the patent: **26.02.2020**
(21) Application number: 16738538.4
(22) Date of filing: 19.02.2016
(51) Int. Cl.: A61C 8/00

(54) **IMPRESSION COPING FOR MAKING DENTAL PROSTHESIS**
ABFORMKAPPE ZUR HERSTELLUNG VON ZAHNPROTHESEN
COIFFE D'EMPREINTE POUR FABRIQUER UNE PROTHÈSE DENTAIRE

(43) Date of publication of application: 26.12.2018
(73) Proprietor: Elsner Global LLC, Charlestown, Nevis (KN)
(72) Inventor: ELSNER Edvin, 2310 Szigetszentmiklós (HU)
(74) Representative: Danubia Patent & Law Office LLC
(86) International application number: PCT/HU2016/050006
(87) International publication number: WO 2017/141061

(56) References cited:
- EP-A1- 2 213 259
- WO-A1-00/02497
- WO-A1-01/43659
- CN-A- 104 546 171

## Description

The invention relates to impression coping for taking an open tray impression for making dental prosthesis. The essentially axially symmetric impression coping comprises a counterpart and a central screw guided through the counterpart for fixing the counterpart to the implant, the counterpart is provided with a positioning end unrotatably fitting into a positioning sleeve formed on the inner surface of the implant and the central screw comprises a head part, a shank and an end part. The end part of the central screw and the implant are connected to each other in releasable manner. That is, length of the central screw is selected so that its end portion at least partially overhangs the counterpart.

Taking impressions of steep conical and other implants imply several deficiencies. The geometry of the matching portion of the conventional impression copings does not make removal of the impression copings from the implants possible in a joint, tensionless manner. The implants in the mouth are always positioned in a different angle relative to each other. The conventional impression copings often cause self-closing during applying wax. In this case when the connected impression copings are removed from the implant they may move relative to each other. That is, when the impression copings are forced out from the wax by the hand they may be displaced by hundredths or even tenths of a millimetre in the wax which results in inaccurate fitting. In this manner the life span of the ceramic bridges decreases, they may break because of the internal stress. Due to the inaccurate fitting the implants may be exposed to stress too. In practice, this causes the so called see-saw movement of the bridges in spite of the fact that it was not perceptible during taking the sample (the sample carries the inaccuracy of the impression).

In case of flat implants and implants having a cone larger than 90° the length of the geometry (square, hexagon, special geometries, etc.) formed on the matching portion of the conventional impression copings in order to prevent them from turning may cause self-closure. In case of steep conical implants when the divergence between the axes of the implants is larger than the angle of the steep cone in the implant and also when the geometry for prevention of turning is too long self-closure may occur. (Thus, in case of implants having e.g. a cone of 12° if the divergence between the axes of two (or more) implants is more than 12° then self-closure takes place and the impression copings can be removed from the implants only if force is applied.)

Generally, the known solutions only relate to the implants. The impression copings are formed in a conventional manner that is, they consist of a screw and a counterpart.

Patent application US 6283753 describes dental implant abutment systems, related devices and implantology processes and techniques. The abutment systems include a base that is adapted to mount in no-rotating fashion on any desired dental implant, root form or blade, from any supplier, together with a fixation screw which secures the base to the implant. A core to which an abutment is cast in customized shape and form is attached to the base in threaded fashion and secured with a non-rotational mechanism. The core and abutment may be formed using CAM processes. Such abutment systems unlike conventional systems do not require a central access bore in the core or abutment components and they occupy significantly less volume than conventional abutments.

This solution describes techniques for fixing prosthesis, generally a single tooth. In case of dental superstructures the superstructure is also attached to the base. This document does not deal with a sample taking method and does not describe an impression coping design.

Patent application US 6227856 describes an abutment and coping system for use with dental implants. The dental abutment forms an abutment post having a transmucosal base portion and a supra-gingival portion having a smaller transverse external cross-section than the proximal end of the base portion. The supra-gingival portion forms a through bore threaded at its proximal end and stepped to form an internal shoulder for seating the head of a screw for attaching the abutment post to the implant. The exterior surface of the abutment post forms a generally polygonal transverse cross-section for receiving hollow components having interior surfaces that can be telescoped over the abutment post. The abutment post is used in an abutment system that includes a healing cap, an impression coping and/or a prosthesis coping forming an interior surface that can be telescoped over the supra-gingival portion of the abutment post. The opposed surfaces of the abutment post and the coping have truncated corners that are very close to each other to maintain a coaxial relationship between the post and the coping, while the portions of the opposed surfaces adjacent to the truncated corners are spaced farther apart to permit limited angular movement of the post and coping relative to each other and to permit the entry of dental cement between the opposed surfaces.

This solution deals with external, protruding polygonal implants and uses gingiva shaper. This solution is used for a single artificial tooth in which case a possible angle divergence is of no importance. It does not give a solution for the case when impression must be taken of two angularly differently positioned implants.

Patent application US 6290499 describes a set of impression components that may be used for either open tray or closed tray impression moulding techniques. The components are used with an impression material to fabricate a model at a site in a jawbone where an implant has been osseointegrated. The solution of this document can be used for making a single prosthetic tooth and it is different from the solution of the present invention as it does not eliminate the disadvantages described here.

Patent application US 6332777 describes a device for forming a dental prosthesis. The device includes a support and an element which can be attached thereto, such as an impression element. The support has an anchoring part for anchoring in a bone or a master model, a shoulder with an annular shoulder face, and a head. The impression element has an elastically deformable fixing agent. When the device is assembled, the fixing agent jams and/or latches with the support, either externally on the support on the side of the shoulder facing the anchoring part, or in an axial hole of the support. The element can be quickly detachably connected to the support by placing it on top of the support, and can be quickly separated from the support by moving the support away. When the device is assembled, the support and the element can lay on top of each other with annular surfaces. The annular surfaces have fully circular outer edges which are visible from the outside in an approximately radial viewing direction.

This solution describes an elastic implant, but it is not clear from the document how displacement of the master pieces can be eliminated in case of two differently angled implants.

EP2213259 and WO0143659 disclose impression copings consisting of several parts.

To sum it up, none of the known solutions ensures that during removal of the counter parts of the sample taking device the correct positions are kept. None of the known solutions not even their combinations can provide the solution of the present invention.

The aim of the present invention is to eliminate the disadvantages of the known impression taking devices.

It has been realised that if the counterparts are separated from the impression taking device before the wax pattern is removed after taking the sample, the disadvantages of the known impression taking procedures can be eliminated.

Accordingly, the present invention is an impression coping for taking open tray impression for making dental prosthesis. The essentially axially symmetric impression coping comprises a counterpart provided with a positioning end unrotatably fitting into a positioning sleeve formed on the inner surface of the implant and a central screw which is guided through the counterpart for fixing the counterpart to the implant, the central screw comprises a head part, a shank and an end portion. The end portion of the central screw can be connected to the implant in a releasable manner. That is, the length of the central screw is selected so that its end portion at least partially overhangs the counterpart. The shank of the central screw is guided through a tubular screw and the counterpart. The tubular screw comprises an internal screw and an external screw which is shorter than the internal screw. The internal screw and the external screw are fixed to each other in unreleasable manner. The tubular screw and the counterpart are arranged on the central screw. They can be moved along and rotated around the axis of the central screw. The inner surface of the counterpart has an internal positioning surface and a threaded seat. On the tubular screw an axially movable and rotatable moving element comprising an upper moving element and a lower moving element is arranged. The external screw is guided through the upper moving element and its end distant from the implant is provided with a flange. On the other end of the external screw that is on its end adjacent to the implant an arrester provided with threads is formed. On the inner surface of the upper moving element internal threads mating with threaded arrester of the external screw are provided. The lower moving element is positioned on the internal screw in such a manner that a slider is installed between them. The slider is axially movable between the internal screw and the lower moving element. The internal positioning surface is also provided on the inner surface of the lower moving element, while on the outer superficies of the slider an external positioning surface matching the internal positioning surface is formed. The lower moving element and the slider are fitted into each other unrotatably relative to each other. The end of the internal screw adjacent to the implant is connected to the threaded seat of the counterpart in releasable manner. The upper moving element and the lower moving element are secured to each other in unreleasable manner.

Preferred embodiments of the impression coping according to the present invention will be defined by the appended claims and the following description.

Detailed description of the impression coping of the invention will be given with reference to the accompanying drawings in which:
Figure 1a is the side view of the assembled impression coping;
Figure 1b shows the cross-section of the impression coping of Figure 1a taken along line A-A;
Figure 2a is the side view of the separated component parts of the impression coping;
Figure 2b is the sectional view of Figure 2a taken along line A-A;
Figure 3 shows the process of assembling the tubular screw, the upper moving element and the slider of the impression coping as viewed from the side;
Figure 4a is the side view of the tubular screw, the upper moving element and the slider of the impression coping when they are assembled;
Figure 4b is the sectional view of Figure 4a taken along line A-A;
Figure 5 shows the process of assembling the lower moving element and the elements of the impression coping shown in Figure 4a as viewed from the side;
Figure 6 shows the possible travel path of the slider within the lower moving element;
Figure 7 is a partial cross-section showing the process of installing the central screw into the assembled elements of Figure 5 as viewed from the side;
Figure 8a is the side view of the assembled impression coping without the central screw;
Figure 8b is the cross-section of Figure 8a taken along line A-A;
Figure 9a is the side view of the disassembled impression coping; and
Figure 9b is the cross-section of the disassembled impression coping of Figure 9a as viewed from the side.

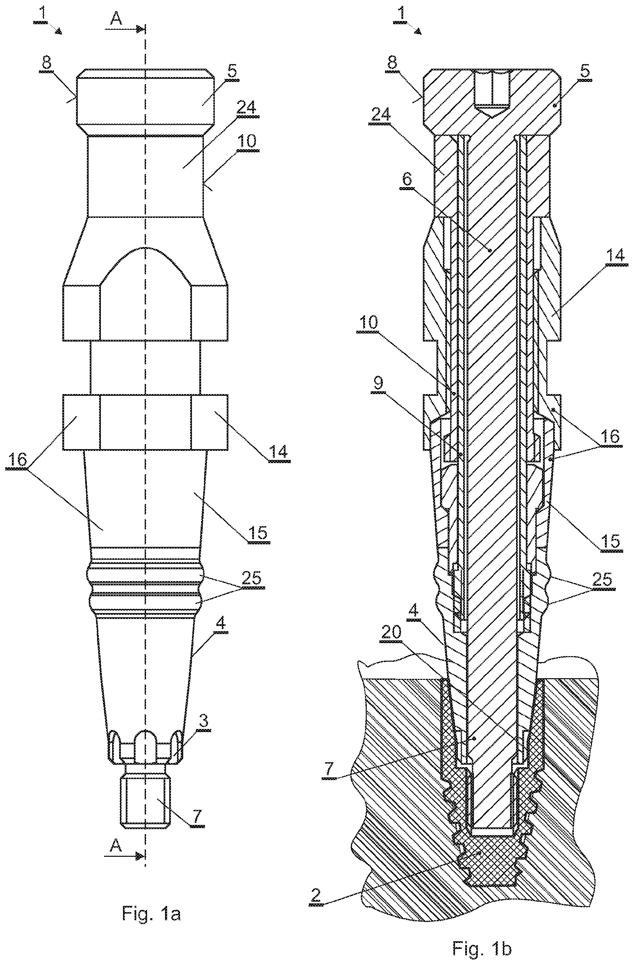

The impression coping 1 according to the invention is suitable for taking open tray impressions for making dental prosthesis (Figures 1a and 1b). The impression coping 1 comprises essentially axially symmetric component parts. On the inner surface of the implant 2 a positioning sleeve 20 is formed in a known manner into which the counterpart 4 is fitted unrotatably by means of its positioning end 3. A central screw 8 is guided through counterpart 4 in order to fix counterpart 4 to implant 2. Central screw 8 comprises a head part 5, a shank 6 and a threaded end part 7. The end part 7 of the central screw 8 is fixed into a threaded sleeve in implant 2 while the positioning end 3 of the counterpart 4 is fitted into positioning sleeve 20 of implant 2. The length of the central screw 8 is selected so that its threaded end part 7 at least partially overhangs counterpart 4 in this manner it can be introduced into threaded sleeve of implant 2. In order to realize the aim of the present invention in the preferred embodiment of the invention further component parts are installed on central screw 8.

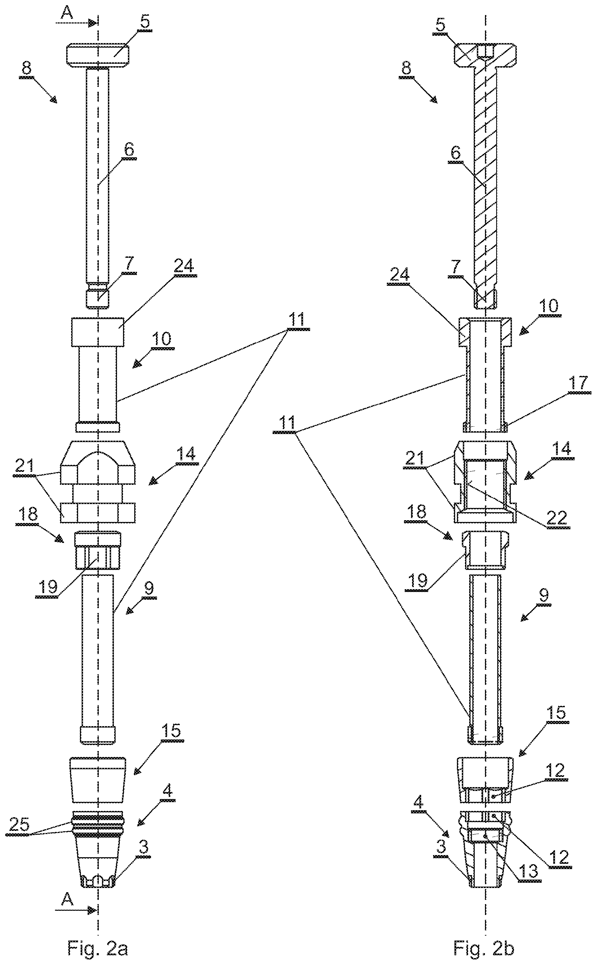

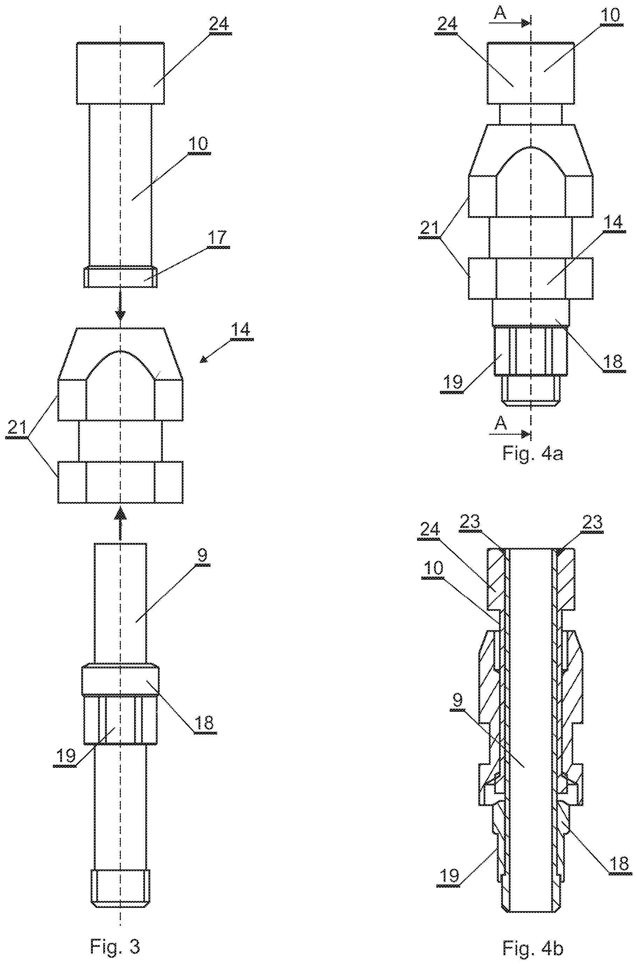

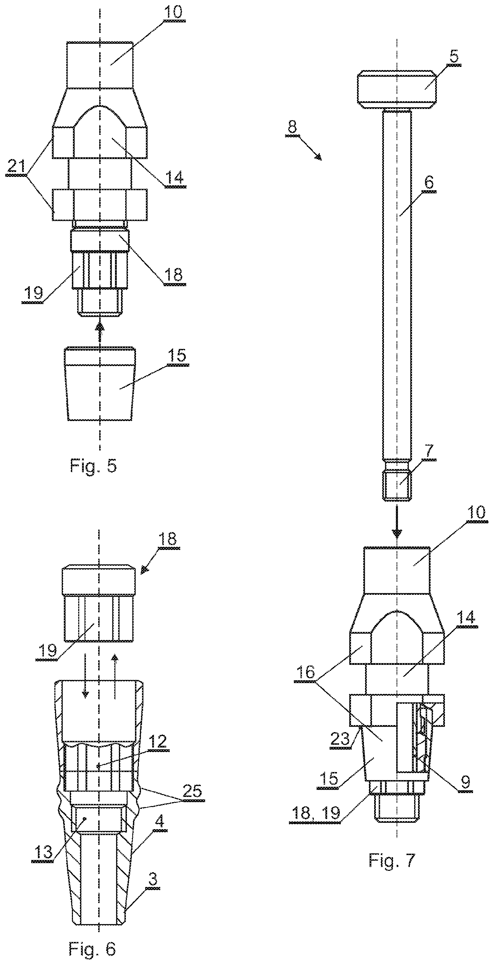

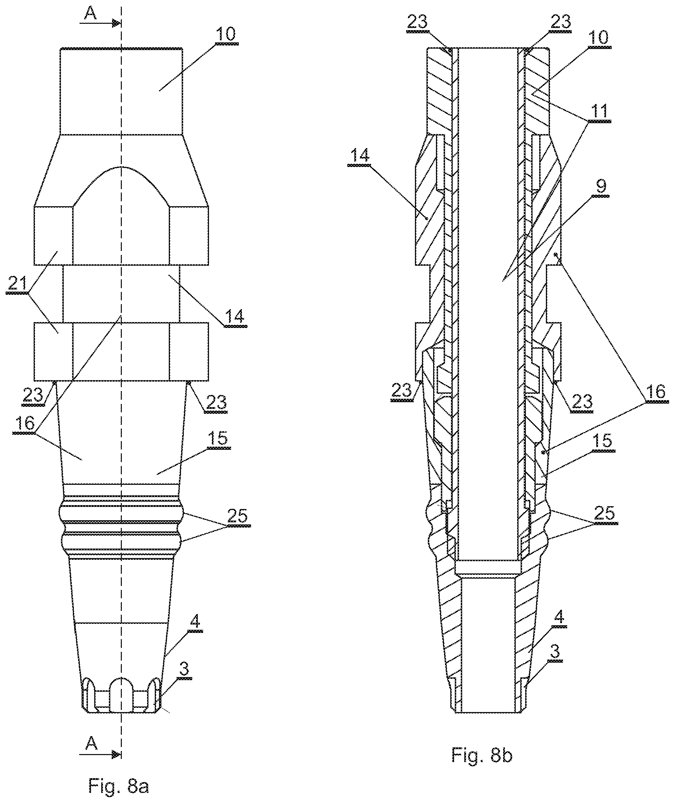

Namely, between the head part 5 and counterpart 4 a tubular screw 11 is placed on the shank 6 of central screw 8. Tubular screw 11 consists of an internal screw 9 and an external screw 10, the external screw 10 is shorter than internal screw 9 and they are fixed to each other in unreleasable manner (Figures 2a, 2b and 3). On the inner surface of counterpart 4 internal positioning surface 12 and threaded seat 13 are formed. On the rim of the counterpart 4 distant from implant 2, arched flange 25 is provided for making disconnection of impression copy 1 easier at counterpart 4 after the pattern is taken. Internal screw 9 and external screw 10 can be fitted into each other. Prior to fitting them together the external screw 10 is guided through an upper moving element 14. The outer superficies 21 of the upper moving element 14 is ribbed and/or cornered so that it cannot get blocked in the wax used for making the pattern and it cannot turn aside. A flange 24 formed on external screw 10 prevents the upper moving element 14 from slipping off the external screw 10. At the end of external screw 10 adjacent to implant 2 a threaded arrester is formed and on the inner surface of the upper moving element 14 internal threads 22 mating with threaded arrester 17 of the external screw 10 are provided. The internal screw 9 is guided through slider 18 (Figure 3). Sliding off the slider 18 is prevented by means of threaded portion formed at the end of the internal screw 9 adjacent to the implant 2. This threaded portion is formed so that it mates with threaded seat 13 of the counterpart 4 (Figure 4a). Thereafter the internal screw 9 is placed into external screw 10 in such a manner that their ends distant from counterpart 4 are set level with each other and they are fixed together through welding 23 (Figure 4b). In this manner internal screw 9 and external screw 10 form a tubular screw 11. Thereafter the lower moving element 15 is pulled onto internal screw 9 and slider 18 (Figure 5) in such a manner that the internal positioning surface 12 formed in the lower moving element 15 mates with the external positioning surface 19 formed on the superficies of slider 18 and slider 18 at least partially slides into lower moving element 15 (Figure 6). Namely, the lower moving element 15 and slider 18 are placed into each other unrotatably relative to each other. Then the upper moving element 14 and the lower moving element 15 are fixed together through welding 23. In this manner moving element 16 is formed (Figures 7, 8a, 8b, 9a and 9b).

Tubular screw 11 and counterpart 4 are movable along the axis of central screw 8 and rotatable around the axis of central screw 8. The moving element 16 comprising upper moving element 14 and lower moving element 15 is axially movable on tubular screw 11 and rotatable around the axis of tubular screw 11.

The positioning end 3 of the counterpart 4 can be shaped to have any form which fits to positioning sleeve 20 of implant 2.

The counterpart 4 and the internal positioning surface 12 of the lower moving element 15 can be a socket head sleeve e.g. a hexagon socket, a star-shaped socket. The external positioning surface 19 of slider 18 is formed as a stud formed as a hexagon screwdriver tip or a star-shaped screwdriver tip which fits to internal positioning surface 12. Internal positioning surface 12 and external positioning surface 19 are always formed to fit into each other. In order to prevent turning an arrester of any design can be used. The head part 5 of central screw 8 and flange 24 are provided with e.g. a polygonal or roughened or ribbed surface which makes their turning easier. The outer superficies 21 of the upper moving element 14 is at least partially ribbed and/or cornered. The head part 5 of the central screw 8 may be e.g. a socket cap or a cornered screw head.

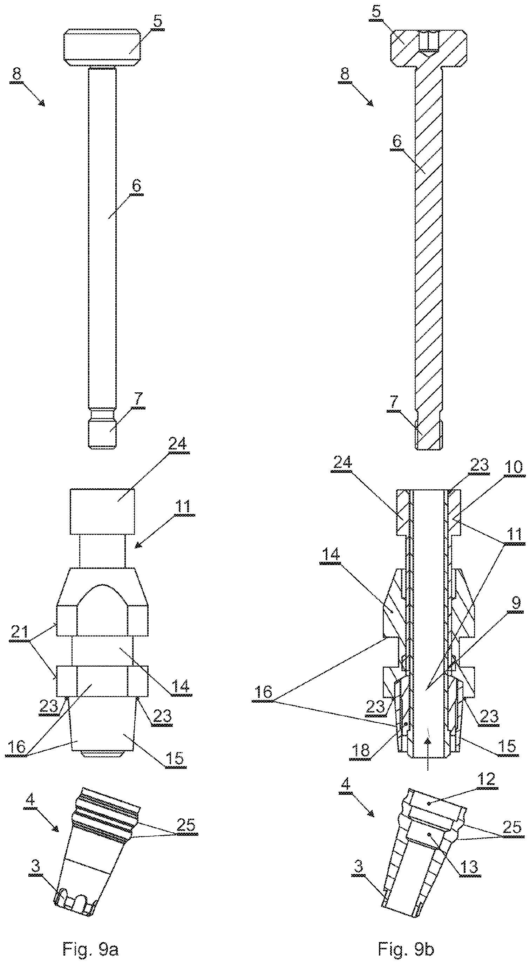

During use of impression coping 1 according to the invention the impression copings 1 assembled according to Figure 1a are fixed in implants 2 as it is shown in Figure 1b. The positioning ends 3 of the counterparts 4 are fitted into the positioning sleeves 20 of implants 2 then they are fixed in the threaded portions of implants 2 by means of end part 7 of the central screw 8. After that the outer superficies 21 of the upper moving elements 14 of moving elements 16 are bond together at their ribbed portions or at the portions between them using the known *Paten Resin* plastic material or some other known binding material in order to ensure firm positioning. Then the impression material is placed in the open tray and the pattern is taken in the known manner. The pliable impression material entirely fills in the space between the impression copings 1. The open tray is placed on the impression copings 1 in such a manner that the head parts 5 of the central screw 8 of the impression copings 1 and the flange 24 of the external screw 10 of tubular screw 11 protrudes from the impression material and the open tray. After setting of the impression material the central screw 8 is driven out. In a following step the external screw 10 of the tubular screw 11 is driven out by means of flange 24. During this the threaded portion of the internal screw 9 of the tubular screw 11 (which on the one hand ensures the connection to counterpart 4, on the other hand prevents slider 18 from sliding off) is unscrewed from counterpart 4 and at the same time the slider 18 is partially raised from counterpart 4. The threaded arrester 17 provided on external screw 10 engages with the internal threads 22 provided in the upper moving element 14 fixed in the impression material. By turning external screw 10 with the help of flange 24 tubular screw 11 is unscrewed. In this manner slider 18 is entirely removed from counterpart 4 (Figures 9a and 9b). Then connection between counterparts 4 and central screws 8 and between the elements of the central screws 8, namely the tubular screw 11 and the moving element 16 is terminated. After that the open tray with the impression material in it, the tubular screw 11 and the moving element 16 fixed in the impression material can be removed from implants 2 and counterparts 4 as a single unit while the angular positions of the counterparts 4 do not change. Removal of the other parts of the sample taking device from counterparts 4 is further made easier by arched flange 25 formed at the rim of counterpart 4. Then counterparts 4 can be removed in a simple manner. During laboratory work the impression copings 1 are re-assembled by placing central screws 8 and counterparts 4 back to tubular screw 11 provided in moving element 16 included in the impression material. Then the laboratory analogue and on the basis of it the prosthesis are made in the known manner.

The advantage of the impression coping according to the invention is that for making a plaster cast only one impression must be taken. It is not necessary to decide in advance whether a single superstructure or a bridge will be produced. The plaster cast produced by using the all-purpose impression coping includes the axis, the position and the orientation of the implants at the same time. Accordingly, the superstructure system of the invention can be placed on in a simple manner. It can compensate the axis divergence of the implant and the crown or prosthesis. Loosening of the fixing screw is prevented. Replacing of the dental prosthesis becomes possible. Thereby time, energy and cost can be saved.

## Claims

1. Impression coping for taking open tray impression for making dental prosthesis wherein the essentially axially symmetric impression coping comprises a counterpart provided with a positioning end unrotatably fitting into a positioning sleeve formed on the inner surface of the implant and a central screw which is guided through the counterpart for fixing the counterpart to the implant, the central screw comprises a head part, a shank and an end portion, the end portion of the central screw can be connected to the implant in a releasable manner, namely, the length of the central screw is selected so that its end portion at least partially overhangs the counterpart wherein said shank (6) of said central screw (8) is guided through a tubular screw (11) and said counterpart (4), said tubular screw (11) comprises an internal screw (9) and an external screw (10) which is shorter than said internal screw (9), said internal screw (9) and said external screw (10) are fixed to each other in unreleasable manner, said tubular screw (11) and said counterpart (4) are arranged on said central screw (8) so that they can be moved along and rotated around the axis of said central screw (8), the inner surface of said counterpart (4) has an internal positioning surface (12) and a threaded seat (13), on said tubular screw (11) an axially movable and rotatable moving element (16) comprising an upper moving element (14) and a lower moving element (15) is arranged, said external screw (10) is guided through said upper moving element (14) and its end distant from said implant (2) is provided with a flange (24), while on its end adjacent to said implant (2) an arrester (17) provided with threads is formed, on the inner surface of said upper moving element (14) internal threads (22) mating with threaded arrester (17) of said external screw (10) are provided, said lower moving element (15) is positioned on said internal screw (9) in such a manner that an axially movable slider (18) is installed between said internal screw (9) and said lower moving element (15), said internal positioning surface (12) is also provided on the inner surface of said lower moving element (15), while on the outer superficies of said slider (18) an external positioning surface (19) matching to said internal positioning surface (12) is formed, said lower moving element (15) and said slider (18) are fitted into each other unrotatably relative to each other, the end of said internal screw (9) adjacent to said implant (2) is connected to said threaded seat (13) of said counterpart (4) in releasable manner, and said upper moving element (14) and said lower moving element (15) are secured to each other in unreleasable manner.

2. Impression coping according to claim 1 wherein said counterpart (4) forming a part of said impression coping (1) has a positioning end (3) which unrotatably fits to any implants (2) provided with a positioning sleeve (20).

3. Impression coping according to any of claims 1 or 2 wherein said internal positioning surface (12) is formed as a socket head sleeve and said external positioning surface (19) is formed as a stud which fits into the socket head sleeve.

4. Impression coping according to any of claims 1 - 3 wherein said head part (5) of said central screw (8) and said flange (24) are provided with a surface which makes their turning easier.

5. Impression coping according to any of claims 1 - 4 wherein the outer superficies (21) of said upper moving element (14) is at least partially ribbed and/or cornered.

6. Impression coping according to any of claims 1 - 5 wherein said head part (5) of said central screw (8) is a socket cap or a cornered screw head.

## Patentansprüche

1. Abformkappe zum Durchführen der offenen Löffeltechnik zum Herstellen einer Zahnprothese, wobei die im Wesentlichen achsensymmetrische Abformkappe ein Gegenstück, das mit einem Positionierende versehen ist, das nicht drehbar in eine Positionierhülse passt, die an der Innenfläche des Implantats ausgebildet ist, und eine zentrale Schraube umfasst, die durch das Gegenstück geführt ist, um das Gegenstück am Implantat zu fixieren, wobei die zentrale Schraube ein Kopfteil, einen Schaft und einen Endabschnitt umfasst, wobei der Endabschnitt der zentralen Schraube auf eine lösbare Weise mit dem Implantat verbunden werden kann, und zwar ist die Länge der zentralen Schraube so ausgewählt, dass ihr Endabschnitt mindestens teilweise vom Gegenstück hervorsteht,
wobei der Schaft (6) der zentralen Schraube (8) durch eine rohrförmige Schraube (11) und das Gegenstück (4) geführt ist, wobei die rohrförmige Schraube (11) eine innere Schraube (9) und eine äußere Schraube (10) umfasst, die kürzer als die innere Schraube (9) ist, wobei die innere Schraube (9) und die äußere Schraube (10) auf eine nicht lösbare Weise aneinander fixiert sind, wobei die rohrförmige Schraube (11) und das Gegenstück (4) so an der zentralen Schraube (8) angeordnet sind, dass die entlang der Achse der zentralen Schraube (8) bewegt und um diese gedreht werden können, wobei die Innenfläche des Gegenstücks (4) eine innere Positionierfläche (12) und einen Gewindesitz (13) aufweist, wobei auf der rohrförmigen Schraube (11) ein axial bewegliches und drehbares Bewegungselement (16), das ein oberes Bewegungselement (14) und ein unteres Bewegungselement (15) umfasst, angeordnet ist, wobei die äußere Schraube (10) durch das obere Bewegungselement (14) geführt ist und ihr Ende distal vom Implantat (2) mit einem Flansch (24) versehen ist, während an ihrem Ende angrenzend an das Implantat (2) eine Arretierung (17) ausgebildet ist, die mit einem Gewinde versehen ist, wobei auf der Innenfläche des oberen Bewegungselements (14) ein Innengewinde (22) bereitgestellt ist, das mit der Gewindearretierung (17) der äußeren Schraube (10) zusammenpasst, wobei das untere Bewegungselement (15) auf eine solche Weise an der inneren Schraube (9) positioniert ist, das ein axial beweglicher Schieber (18) zwischen der inneren Schraube (9) und dem unteren Bewegungselement (15) installiert ist, wobei die innere Positionierfläche (12) ebenfalls an der Innenfläche des unteren Bewegungselements (15) bereitgestellt ist, während an der äußeren Oberfläche des Schiebers (18) eine äußere Positionierfläche (19) ausgebildet ist, die zu der inneren Positionierfläche (12) passt, wobei das untere Bewegungselement (15) und der Schieber (18) relativ zueinander nicht drehbar ineinandergefügt sind, wobei das Ende der inneren Schraube (9) angrenzend an das Implantat (2) mit dem Gewindesitz (13) des Gegenstücks (4) auf lösbare Weise verbunden ist, und wobei das obere Bewegungselement (14) und das untere Bewegungselement (15) auf unlösbare Weise aneinander gesichert sind.

2. Abformkappe nach Anspruch 1, wobei das Gegenstück (4), das einen Teil der Abformkappe (1) ausbildet, ein Positionierende (3) aufweist, welches nicht drehbar in beliebige Implantate (2) passt, die mit einer Positionierhülse (20) versehen sind.

3. Abformkappe nach einem der Ansprüche 1 oder 2, wobei die innere Positionierfläche (12) als Inbushülse ausgebildet ist und die äußere Positionierfläche (19) als ein Bolzen ausgebildet ist, der in die Inbushülse passt.

4. Abformkappe nach einem der Ansprüche 1-3, wobei das Kopfteil (5) der zentralen Schraube (8) und der Flansch (24) mit einer Fläche versehen sind, die das Drehen davon erleichtert.

5. Abformkappe nach einem der Ansprüche 1-4, wobei die äußere Oberfläche (21) des oberen Bewegungselements (14) mindestens teilweise geriffelt und/oder eckig ist.

6. Abformkappe nach einem der Ansprüche 1-5, wobei das Kopfteil (5) der zentralen Schraube (8) ein Inbusaufsatz oder ein eckiger Schraubenkopf ist.

## Revendications

1. Coiffe d'empreinte pour prendre une empreinte à plateau ouvert pour fabriquer une prothèse dentaire, dans laquelle la coiffe d'empreinte sensiblement axialement symétrique comprend une contrepartie dotée d'une extrémité de positionnement s'emboîtant de manière non rotative dans un manchon de positionnement formé sur la surface intérieure de l'implant et une vis centrale qui est guidée à travers la contrepartie pour fixer la contrepartie à l'implant, la vis centrale comprend une partie tête, une tige et une partie extrémité, la partie extrémité de la vis centrale peut être raccordée à l'implant de manière libérable, précisément, la longueur de la vis centrale est sélectionnée de manière à ce que sa partie extrémité dépasse au moins partiellement de la contrepartie dans laquelle ladite tige (6) de ladite vis centrale (8) est guidée à travers une vis tubulaire (11) et ladite contrepartie (4), ladite vis tubulaire (11) comprend une vis interne (9) et une vis externe (10) qui est plus courte que ladite vis interne (9), ladite vis interne (9) et ladite vis externe (10) sont fixées l'une à l'autre de manière non libérable, ladite vis tubulaire (11) et ladite contrepartie (4) sont agencées sur ladite vis centrale (8) de manière à ce qu'elles puissent se déplacer le long et pivoter autour de l'axe de ladite vis centrale (8), la surface intérieure de ladite contrepartie (4) a une surface de positionnement interne (12) et un siège fileté (13), sur ladite vis tubulaire (11) un élément mobile axialement mobile et rotatif (16) comprenant un élément mobile supérieur (14) et un élément mobile inférieur (15) est agencé, ladite vis externe (10) est guidée à travers ledit élément mobile supérieur (14) et son extrémité distale dudit implant (2) est dotée d'une bride (24), alors que sur son extrémité adjacente au dit implant (2) un arrêt (17) doté de filetages est formé, sur la surface intérieure dudit élément mobile supérieur (14) des filetages internes (22) s'accouplant à l'arrêt fileté (17) de ladite vis extérieure (10) sont fournis, ledit élément mobile inférieur (15) est positionné sur ladite vis interne (9) de telle manière qu'un curseur axialement mobile (18) est installé entre ladite vis interne (9) et ledit élément mobile inférieur (15), ladite surface de positionnement interne (12) est également fournie sur la surface interne dudit élément mobile inférieur (15), alors que sur la superficie extérieure dudit curseur (18) une surface de positionnement externe (19) correspondant à ladite surface de positionnement interne (12) est formée, ledit élément mobile inférieur (15) et ledit curseur (18) sont emboîtés l'un dans l'autre de manière non rotative l'un par rapport à l'autre, l'extrémité de ladite vis interne (9) adjacente au dit implant (2) est raccordée au dit siège fileté (13) de ladite contrepartie (4) de manière libérable, et ledit élément mobile supérieur (14) et ledit élément mobile inférieur (15) sont fixés l'un à l'autre de manière non libérable.

2. Coiffe d'empreinte selon la revendication 1, dans laquelle ladite contrepartie (4) formant une partie de ladite coiffe d'empreinte (1) a une extrémité de positionnement (3) qui s'adapte de manière non rotative à tout implant (2) doté d'un manchon de positionnement (20).

3. Coiffe d'empreinte selon l'une quelconque des revendications 1 ou 2, dans laquelle ladite surface de positionnement interne (12) est formée comme un manchon à tête creuse et ladite surface de positionnement (19) est formée comme un tenon qui s'adapte dans le manchon à tête creuse.

4. Coiffe d'empreinte selon l'une quelconque des revendications 1 à 3 dans laquelle ladite partie tête (5) de ladite vis centrale (8) et ladite bride (24) sont dotées d'une surface qui rend leur rotation plus facile.

5. Coiffe d'empreinte selon l'une quelconque des revendications 1 à 4 dans laquelle la superficie extérieure (21) dudit élément mobile supérieur (14) est au moins partiellement nervurée et/ou angulaire.

6. Coiffe d'empreinte selon l'une quelconque des revendications 1 à 5 dans laquelle ladite partie tête (5) de ladite vis centrale (8) est un capuchon de douille ou une tête de vis angulaire.
